# EUROPÄISCHE PATENTSCHRIFT

(11) **EP 2 059 663 B1**
(45) Veröffentlichungstag und Bekanntmachung des Hinweises auf die Patenterteilung: **24.02.2010**
(21) Anmeldenummer: 07818065.0
(22) Anmeldetag: 06.09.2007
(51) Int. Cl.: F02D 23/02, F02B 37/22, F02D 13/02, F01D 9/02, F01D 9/04, F02C 6/12

(54) **VERFAHREN UND VORRICHTUNG ZUM BETREIBEN EINER BRENNKRAFTMASCHINE**
METHOD AND DEVICE FOR OPERATING AN INTERNAL COMBUSTION ENGINE
PROCÉDÉ ET DISPOSITIF D'EXPLOITATION D'UN MOTEUR À COMBUSTION INTERNE

(30) Priorität: 08.09.2006 DE 102006042839
(43) Veröffentlichungstag der Anmeldung: 20.05.2009
(73) Patentinhaber: BorgWarner, Inc., Auburn Hills, MI 48326-2872 (US)
(72) Erfinder: SCHMALZL, Hans-Peter, 64385 Reichelsheim (DE)
(74) Vertreter: Schmitz, Hans-Werner
(86) Internationale Anmeldenummer: PCT/EP2007/007793
(87) Internationale Veröffentlichungsnummer: WO 2008/028666

(56) Entgegenhaltungen:
- EP-A- 1 650 421
- AU-A- 1 630 383
- DE-A1- 10 041 806
- DE-A1- 19 924 228
- DE-A1-102005 002 246
- DE-C1- 4 242 494
- GB-A- 987 582
- 1: "ADVANCED TECHNOLOGIES: AIR INDUCTION" DIESELNET TECHNOLOGY GUIDE, XX, XX, Juli 2002 (2002-07), Seiten 1-12, XP000962325

## Beschreibung

Die Erfindung betrifft ein Verfahren und eine Vorrichtung zum Betreiben einer Brennkraftmaschine gemäß dem Oberbegriff des Anspruches 1 bzw. des Anspruches 5.

Ein gattungsgemäßes Verfahren und eine gattungsgemäße Vorrichtung sind aus der DE 103 03 705 B4 bekannt.

Bei dem bekannten Verfahren und der bekannten Vorrichtung wird eine Aufladevorrichtung verwendet, die mit einem sogenannten Waste-Gate versehen ist, um deren Leistung steuern zu können.

Insbesondere wenn es sich bei der Brennkraftmaschine um einen Otto-Motor handelt, werden Aufladevorrichtungen bzw. Abgas-Turbolader mit einflutigen Turbinen und Waste-Gate-Ventilen verwendet, da sie im Hinblick auf die höheren AbgasTemperaturen von Otto-Motoren und die größere Luftdurchsatzspanne bisher als am besten geeignet erschienen.

Allerdings sind Otto-Motoren mit einem Waste-Gate-Turbolader hinsichtlich des Kraftstoffverbrauches und der Fahrdynamik immer noch stark verbesserungsbedürftig.

Ein Verfahren und eine Vorrichtung gemäß dem Oberbegriff des Anspruchs 1 bzw. des Anspruchs 5 sind aus DE 10 2005 002 246 A bekannt.

Es ist daher Aufgabe der vorliegenden Erfindung, ein Verfahren und eine Vorrichtung zum Betreiben einer Brennkraftmaschine der im Oberbegriff des Anspruches 1 bzw. des Anspruches 5 entsprechenden Gattung zu schaffen, die eine Wirkungsgradverbesserung insbesondere hinsichtlich der Drehmomententwicklung und des Kraftstoffverbrauchs ermöglichen.

Die Lösung dieser Aufgabe erfolgt durch die Merkmale des Anspruchs 1 bzw. des Anspruchs 5.

Beim Verfahren gemäß Anspruch 1 bzw. der Vorrichtung gemäß Anspruch 5 wird ein Abgas-Turbolader mit einer verstellbaren Turbinengeometrie und mit einem mehrflutigen Turbinengehäuse das zwei getrennt geführte Spiralkanäle aufweist, verwendet, was zu einer wesentlich besseren Stoßausnutzung der Abgasenergie und damit zu einer Ladedruckerhöhung im unteren Motorlast- und Drehzahlbereich führt. Insbesondere kommen dabei Zwillingstrom- und Doppelstrom-Turbinengehäuse in Betracht.

Beim Zwillingstromgehäuse liegen die beiden Spiralfluten axial nebeneinander und sind durch eine Trennwand voneinander getrennt. Konstruktionsbedingt können die Überströmquer-schnitte nicht beliebig klein ausgeführt werden, so dass eine Vermischung der beiden Fluten in gewissem Maße stattfinden kann. Dies wirkt sich positiv im mittleren und hohen Drehzahlbereich aus, da dort der Stoßeffekt nicht mehr erwünscht ist, da genügend Ladedruck zur Verfügung steht.

Das Doppelstromturbinengehäuse zeichnet sich durch zwei radial über den Turbinenumfang getrennt geführte Turbinenstränge in Form von Spiralkanälen aus, wobei die Überströmquerschnitte kleinstmöglich ausgeführt werden können und damit die gegenseitige Beeinflussung der Abgasströme minimiert wird. Dies hat zur Folge, dass im mittleren und oberen Motorlast- und Drehzahlbereich zusätzliche Maßnahmen vorteilhaft sind, um das Abgas- und Ladedruckniveau zu senken.

Um einen geringeren Maximaldurchsatz durch die Turbine aufgrund des mit der Doppelstromanordnung begrenzten Zuströmquerschnittes über den Umfang der Turbine (180° pro Turbinenstrang) zu kompensieren, ist gemäß Anspruch 1 bzw. Anspruch 5 die Doppelstrom-turbine mit einer Stoß-Stau-Umschaltung versenen. Mit dieser Umschaltung können die beiden Turbinenstränge bei mittleren und hohen Motordrehzahlen (ab etwa 3000 1/min.) verbunden werden. Wird das hierfür vorgesehene Umschaltventil geöffnet, kann sich das Abgas auf beide Turbinenstränge verteilen und die Pulsation wird zusätzlich reduziert. Beide Effekte bewirken ein Absinken der Turbinenlast und damit die gewünschte Begrenzung des Ladedrucks.

Gleichzeitig ist es möglich, das Stoß-Stau-Umschaltventil als zusätzliches Waste-Gate zu betreiben, was den Vorteil ergibt, dass der Durchsatzbereich der Turbine noch weiter gesteigert werden kann.

Erfindungsgemäß kann somit im Zusammenhang mit einer Einstellung der Ventilüberschneidung der Gaswechselventile das volle Potential der optimierten Flutentrennung eines Turboladers mit mehrflutigem Turbinengehäuse ausgeschöpft werden. Denn es wird erfindungsgemäß möglich, längere Ventilüberschneidungen im unteren Motordrehzahlbereich zu realisieren und damit den Spülluftanteil in diesem Kennfeldbereich wesentlich zu steigern.

Diese Maßnahme hat einen sehr positiven Einfluss auf die Motorbetriebswerte aufgrund folgender Umstände:
- verringerte Klopfempfindlichkeit durch Reduktion des Restgasanteils;
- Absenkung der mittleren Abgastemperatur vor der Turbine des Abgas-Turboladers und damit der Möglichkeit, das Verbrennungsluftverhältnis anzuheben; und
- Verringerung der notwendigen Durchsatzspanne für den Verdichter und die Turbine des Abgas-Turboladers und damit die Möglichkeit, den Abgas-Turbolader bei besseren Wirkungsgraden zu betreiben.

Die Unteransprüche haben vorteilhafte Weiterbildungen des erfindungsgemäßen Verfahrens bzw. der erfindungsgemäßen Vorrichtung zum Inhalt.

Im Rahmen der Erfindung durchgeführte Untersuchungen haben ergeben, dass die erfindungsgemäßen Maßnahmen des Vorsehens eines Abgas-Turboladers mit variabler Turbinengeometrie und einer Doppelstrom-Turbine und die vorzugsweise vorgesehene Stoß-Stau-Umschaltung sowie das Vorsehen einer vergrößerten Ventilüberschneidung zu einer Steigerung des stationären Volllastdrehmomentes von 40% bei Umdrehungszahlen von n_{M} 1500 1/min. führen kann. Gleichzeitig kann das Spüldruckgefälle um ca. 400 mbar im Nennleistungspunkt gegenüber einem einflutigen Wast-Gate-Basislader verbessert werden.

Weitere im Rahmen der Erfindung durchgeführte Untersuchungen haben ergeben, dass im Instationärbetrieb am Beispiel eines Lastsprunges bei n_{M} 1800 1/min. eine Verkürzung der Zeit bis zum Erreichen von 90% des Nennmomentes um ca. 50% erreichbar ist.

Weitere Einzelheiten, Vorteile und Merkmale der vorliegenden Erfindung ergeben sich aus nachfolgender Beschreibung von Ausführungsbeispielen anhand der beigefügten Zeichnung. Darin zeigt:
- Fig. 1: ein schematisch stark vereinfachtes Blockschalt- bild einer erfindungsgemäßen Vorrichtung zum Betreiben einer Brennkraftmaschine in Form eines Otto-Motors mit Direkteinspritzung,
- Fig. 2A, 2B: eine schematische vereinfachte Darstellung eines Zwillingstrom- bzw. eines Doppelstrom-Turbinen- gehäuses eines Turboladers, der Teil der Vorrich- tung gemäß Fig. 1 ist,
- Fig. 3: eine Darstellung des Überströmquerschnitts des Zwillingstromgehäuses,
- Fig. 4A, 4B: Motorvergleichswerte mit einflutigem-, Zwilling- strom- und Doppelstrom-Turbinengehäuse,
- Fig. 5A, 5B: eine schematische vereinfachte Darstellung eines Doppelstrom-Turbinengehäuses mit Stoß-Stau-Um- schaltventil,
- Fig. 6A, 6B: Motorvergleichwerte mit und ohne Stoß-Stau-Um- schaltung,
- Fig. 7: die Verschiebung der Ventilerhebungskurven,
- Fig. 8: den Einfluss der Ventilüberschneidung auf die Mo- torwerte.

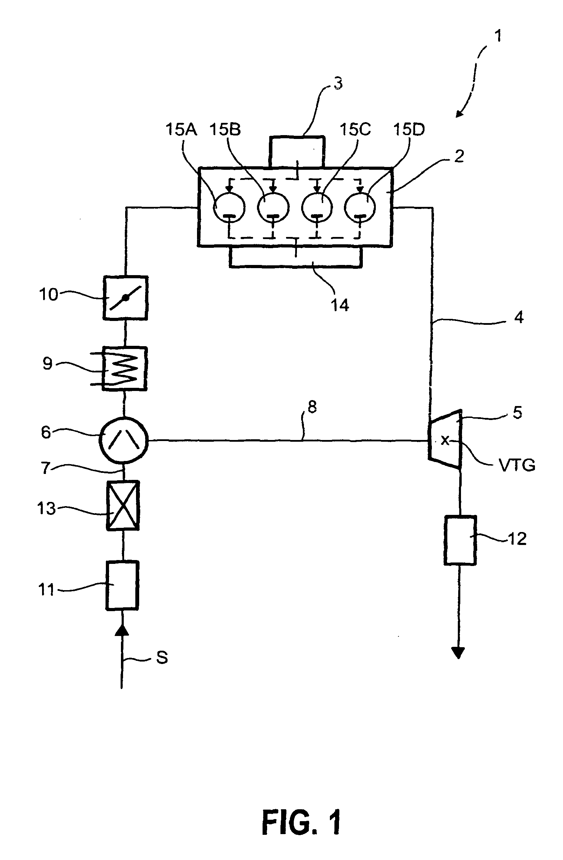

In Fig. 1 ist als Blockschaltbild vereinfacht eine Vorrichtung 1 zum Betreiben einer Brennkraftmaschine 2 dargestellt, die als Otto-Motor mit Direkteinspritzung ausgebildet ist. Unter Brennkraftmaschinen, insbesondere Otto-Motoren mit Direkteinspritzung, versteht man Brennkraftmaschinen, bei denen im Gegensatz zur Saugrohreinspritzung Kraftstoff mit hohem Druck direkt in die Verbrennungsräume der Brennkraftmaschine eingespritzt wird. Hierzu können Einspritzeinrichtungen mit einem zentralen Druckspeicher (Common-Rail) verwendet werden, bei denen mittels einer Hochdruckpumpe ein von einem elektronischen Steuergerät der Brennkraftmaschine über einen Drucksensor und einen Druckregel geregelten Kraftstoffdruck in der Verteilerleiste (Common-Rail) aufgebaut wird, wobei dieser Druck zumindest weitgehend unabhängig von der Drehzahl und der Einspritzmenge ist. Symbolisch ist ein derartiges Einspritzsystem in Fig. 1 mit dem Block 3 am Otto-Motor 2 dargestellt.

Die Vorrichtung 1 weist im Einzelnen eine Aufladevorrichtung in Form eines Abgas-Turboladers auf, der wie üblich eine stromab des Verbrennungsmotors 2 in einem Abgaskanal 4 angeordnete Turbine 5 aufweist, die mit einem Verdichter 6 zusammenwirkt, der in einem Ansaugkanal 7 angeordnet ist. Die vom Abgas angetriebene Turbine 5 treibt den Verdichter 6 an, was durch die Verbindungslinie 8 symbolisiert ist. Erfindungsgemäß ist die Turbine 5 des Abgas-Turboladers mit einer in Fig. 1 nicht näher dargestellten veränderlichen Turbinengeometrie versehen, was in Fig. 1 durch die übliche Abkürzung VTG symbolisiert ist. Der Abgas-Turbolader gemäß vorliegender Erfindung kann ansonsten als üblicher Abgas-Turbolader mit einer VTG ausgebildet sein, wie z.B. in EP 1 398 463 B1 dargestellt, wobei natürlich hinsichtlich der verwendeten Materialien entsprechende Anpassungen an das Temperaturniveau eines Otto-Motors durchgeführt sind, da das Abgas-Temperaturniveau höher liegt als das von Dieselmotoren, bei denen Turbolader mit veränderlicher Turbinengeometrie bereits seit langem eingesetzt werden.

Bei der in Fig. 1 dargestellten besonders bevorzugten Ausführungsform ist stromabwärts des Verdichters 6 ein Ladeluftkühler 9 vorgesehen, von dem aus die verdichtete und gekühlte Ansaugluft über einen Drosselklappenblock 10 zu den Brennräumen 15A-15D des Otto-Motors 2 geleitet wird. Vor dem Verdichter 6 (gesehen in Strömungsrichtung S) sind wie üblich ein Luftfilter 11 und ein Luftmassenmesser 13 angeordnet, die jedoch für die vorliegende Erfindung keine besondere Rolle spielen, jedoch aus Gründen der Vollständigkeit beschrieben sind.

Im Übrigen sind natürlich auch alle sonstigen üblichen Aggregate vorgesehen, die jedoch nachfolgend nicht näher beschrieben werden, da sie für die Erläuterung der Prinzipien vorliegender Erfindung nicht erforderlich sind.

Die Vorrichtung 1 weist jedoch ferner eine Einrichtung 14 zur Einstellung der Ventilüberschneidung der in Fig. 1 nicht näher dargestellten Gaswechselventile der Brennkraftmaschine bzw. des Otto-Motors 2 auf, die in Fig. 1 mit dem Block 14 symbolisiert ist. Mit dieser Einrichtung 14 kann die Ventilüberschneidung variiert werden, um, wie eingangs erläutert, gezielt unterschiedliche Überschneidungen des Öffnungsgrades der einlassseitigen bzw. auslassseitigen Gaswechselventile möglich zu machen, wobei größere Überschneidungen eine Verbesserung des Ausspülens von Restgas durch größere Frischluftmengen möglich machen, was bei Otto-Motoren mit Direkteinspritzung möglich ist, da, wie zuvor erläutert, die Direkteinspritzung den Kraftstoff direkt in die Brennräume einspritzt und nicht in die durch das Ansaugrohr strömende Ansaugluft.

Der Vollständigkeit halber sei erwähnt, dass es natürlich möglich ist, die in Fig. 1 dargestellte Vorrichtung 1 mit einem Abgaskatalysator 12 zu versehen, der stromab der Turbine 5 im Auspufftrakt des Otto-Motors 2 angeordnet sein kann.

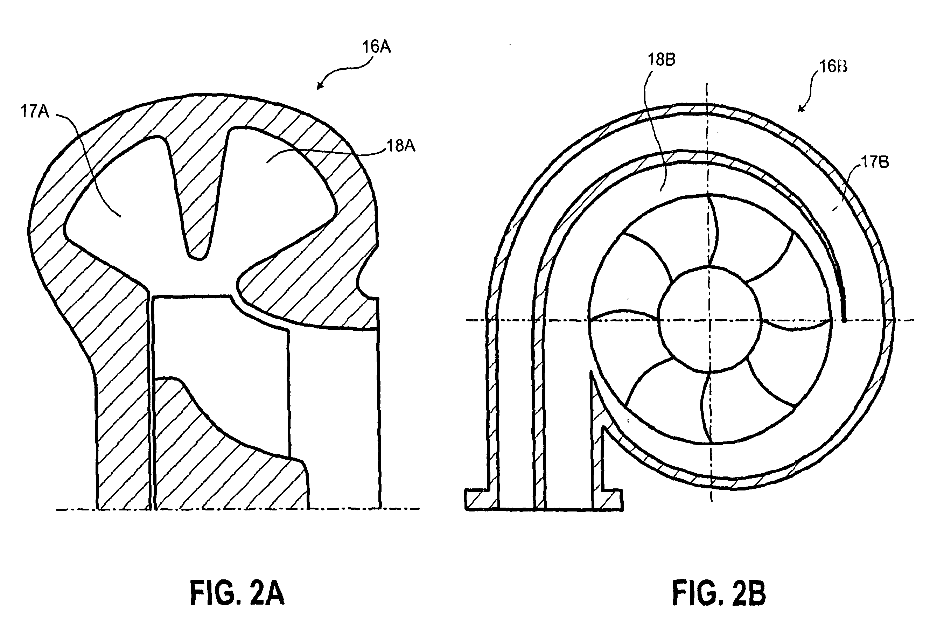

Wie ebenfalls eingangs bereits erläutert wurde, ist die Turbine 5 des Abgas-Turboladers der erfindungsgemäßen Vorrichtung 1 neben einer veränderlichen Turbinengeometrie VTG ferner mit einem mehrflutigen Turbinengehäuse versehen, das in den Fig. 2A, 2B näher dargestellt ist.

In Fig. 2A ist ein Zwillingstrom-Turbinengehäuse 16A dargestellt, dass Spiralfluten 17A und 18A aufweist.

In Fig. 2B ist ein Doppelstrom-Turbinengehäuse 16B mit zwei über den Turbinenumfang getrennt geführten Spiralkanälen 17B und 18B dargestellt, die es möglich machen, die Überströmquerschnitte extrem zu verkleinern und damit die gegenseitige Beeinflussung der Abgasströme zu minimieren. Mit einem derartigen Turbinengehäuse 16 ist es möglich, das volle Potential der sich aus der getrennten Führung der Spiralkanäle 17 und 18 ergebenden Flutentrennung im Zusammenhang mit der Einstelleinrichtung 14 zur Nockenwellenverstellung im Motorkennfeld und damit zur Variierung der Überschneidung der Gaswechselventile auszuschöpfen. Insbesondere ist es möglich, die zuvor erläuterten längeren Ventilüberschneidungen im unteren Motordrehzahlbereich zu realisieren und damit den Spülluftanteil in diesem Kennfeldbereich wesentlich zu steigern.

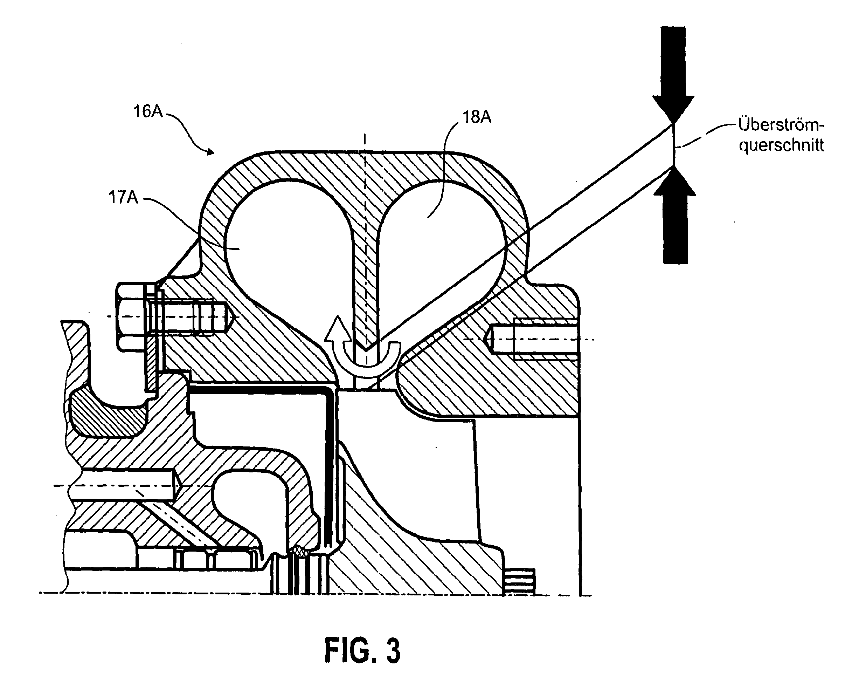

Fig. 3 zeigt die gegenseitige Beeinflussung der beiden Spiralfluten 17A, 18A des Zwillingstrom-Turbinengehäuses 16A anhand des Überströmquerschnitts.

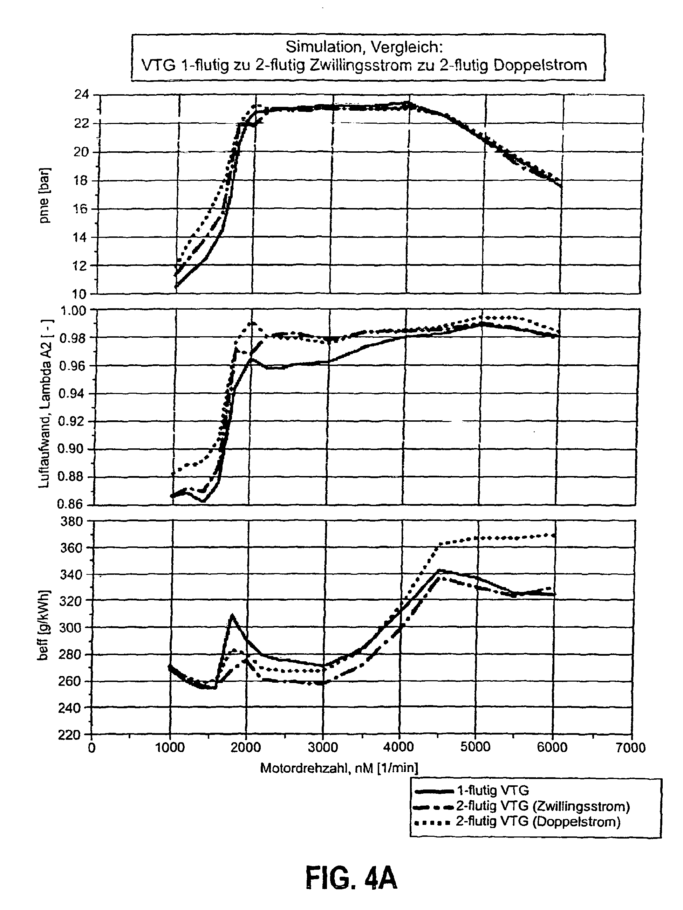

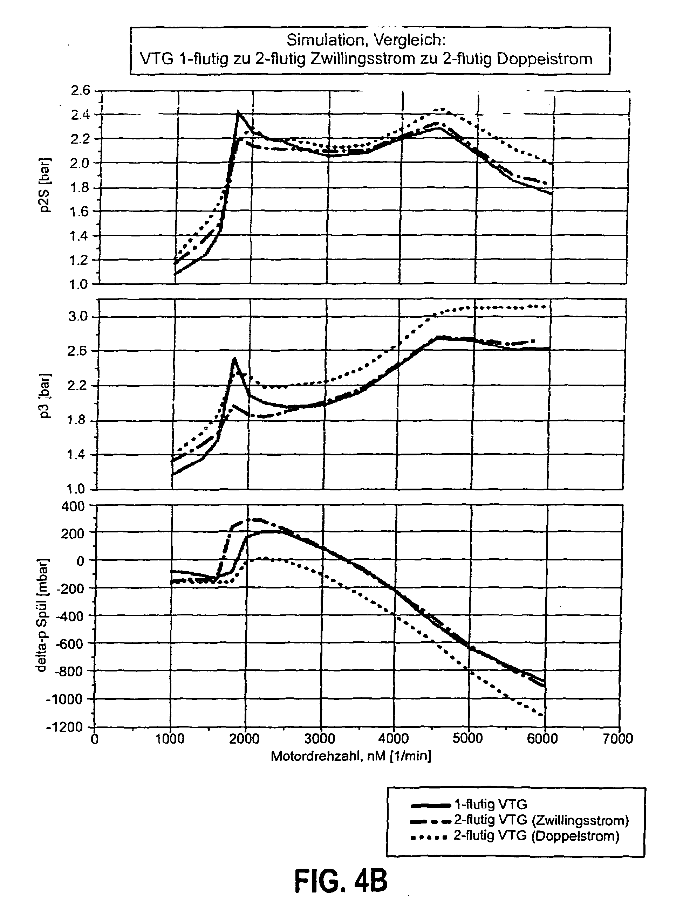

Fig. 4A, 4B zeigen Motorvolllastvergleichswerte mit den Aufladevarianten "1-flutig mit VTG" als Basis und "2-flutig Zwillingstrom mit VTG" sowie "2-flutig Doppelstrom mit VTG". Man erkennt, dass im Drehzahlbereich 1000-2000 U/min. die 2-flutigen Varianten Vorteile im Drehmomentenaufbau haben und das Doppelstromgehäuse (ohne Stoß-Stau-Umschaltung) oberhalb von 4000 U/min. Nachteile im Druckniveau und im Kraftstoffverbrauch mit sich bringt.

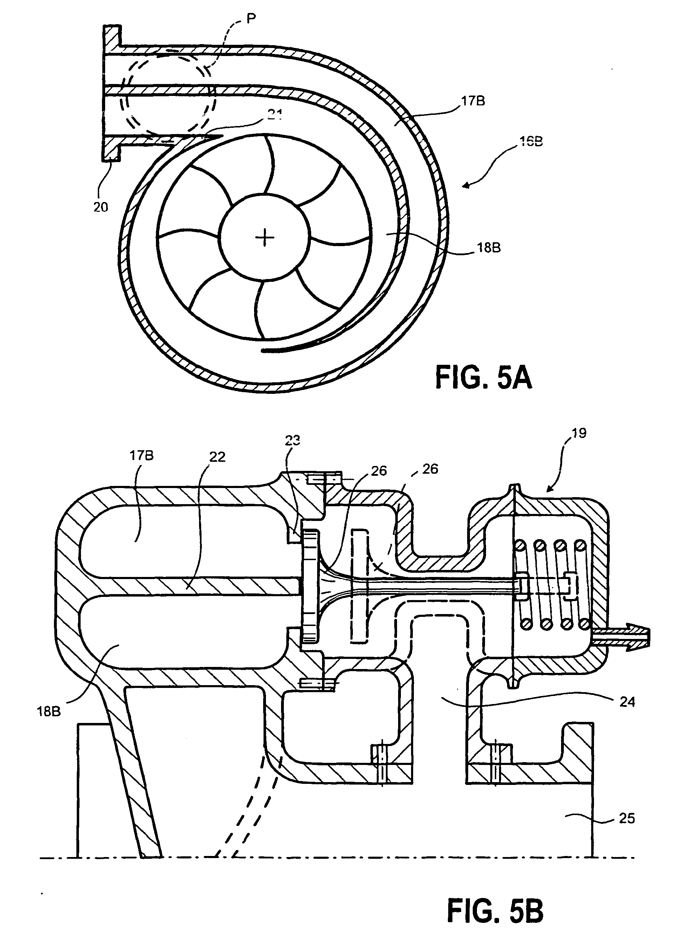

Die Fig. 5A, 5B zeigen eine beispielhafte Anordnung eines Stoß-Stau-Umschaltventils 19 in Verbindung mit dem Doppelstrom-Turbinengehäuse 16B. Das Stoß-Stau-Umschaltventil 19 kann entweder als separate Einheit vor dem Turbinengehäuseeintrittsflansch 20 angeordnet oder seitlich am Turbinengehäuseeinlaufkanal integriert werden. Dabei ist zu beachten, dass die Positionierung P des Ventils 19 stromauf der Turbinengehäusezunge 21 erfolgt, um sicherzustellen, dass zuvor kein Abgasmassenabfluss ins Turbinenrad stattfinden kann.

Das Ventil 19 zeichnet sich dadurch aus, dass es sich bei kleinen Hüben von der Trennwand 22 der beiden Turbinengehäusestränge 17B, 18B abhebt und eine Vermischung und somit ein Druckausgleich zwischen den Strängen ermoglicht. Der Ventilsitz 23 kann derart ausgebildet werden, dass bei größeren Hüben des Schließteils 26 zusätzlich eine Bypassmenge durch einen Bypass 24 in Richtung Turbinengehäuseaustritt 25 fließen kann. Die Ansteuerung des Ventils 19 kann konventionell pneumatisch, elektrisch oder elektromagnetisch erfolgen.

Die Anordnung eines Stoß-Stau-Umschaltventils 19 bei einem Zwillingstromgehäuse erfolgt radial am äußeren Gehäuseumfang, stromauf der Gehäusezunge, ist aber nicht näher dargestellt.

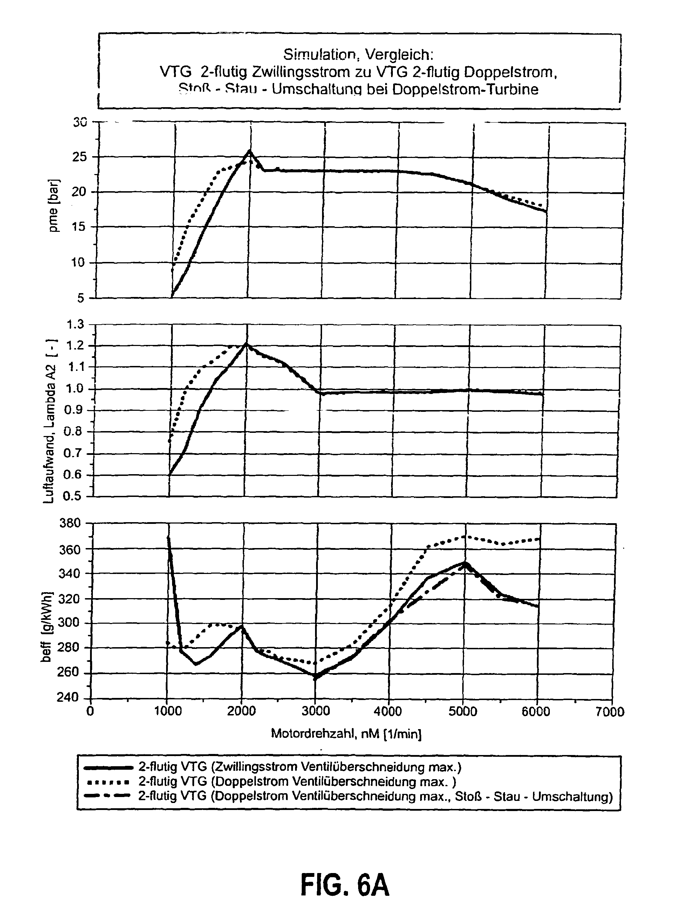

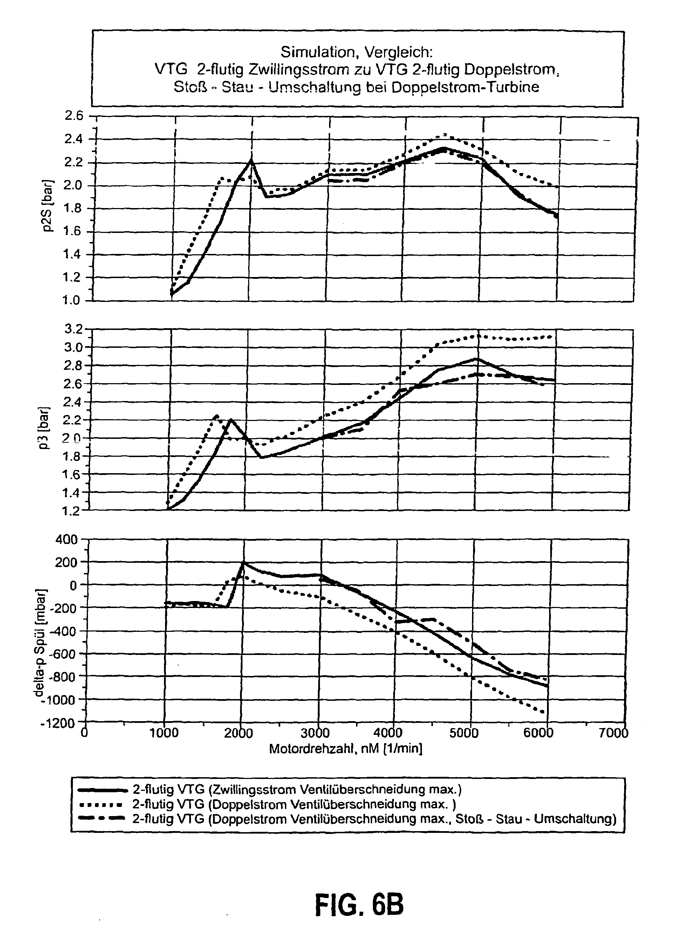

In den Fig. 6A, 6B ist der Einfluss der vergrößerten Ventilüberschneidung und der Stoß-Stau-Umschaltung auf die Motorbetriebswerte dargestellt. Man erkennt, dass im unteren Motordrehzahlbereich zwischen 1000 und 2000 l/min. eine deutliche Drehmomentsteigerung erreicht werden kann. Bei Drehzahlen oberhalb von 3000 1/min. kann durch Öffnen des Stoß-Stau-Ventils ein Anstieg des Abgasdruckniveaus und des daraus resultierenden höheren Kraftstoffverbrauchs vermieden werden.

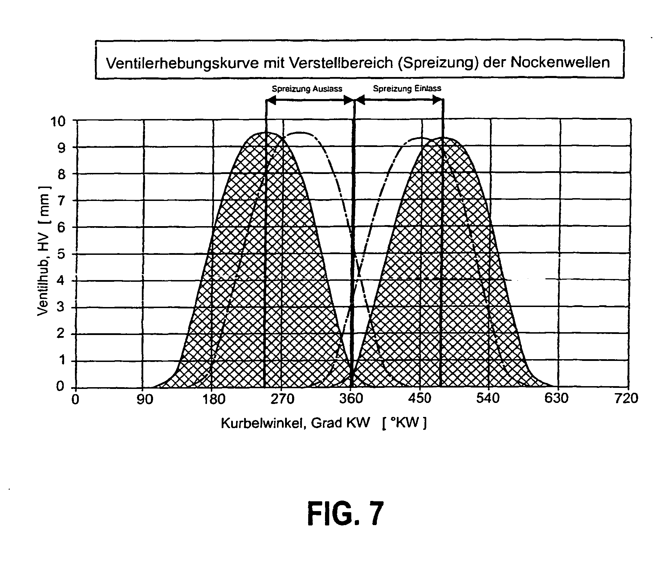

Fig. 7 zeigt beispielhaft die mögliche Verschiebung der Ventilerhebungskurven aufgrund einer Nockenwellenverstellung. Die Spreizung beschreibt dabei den zeitlichen Abstand des jeweiligen Kurvenmaximums zum oberen Totpunkt in Grad Kurbelwinkel. Kleine Spreizungswerte führen daher zu einer großen Ventilüberschneidung.

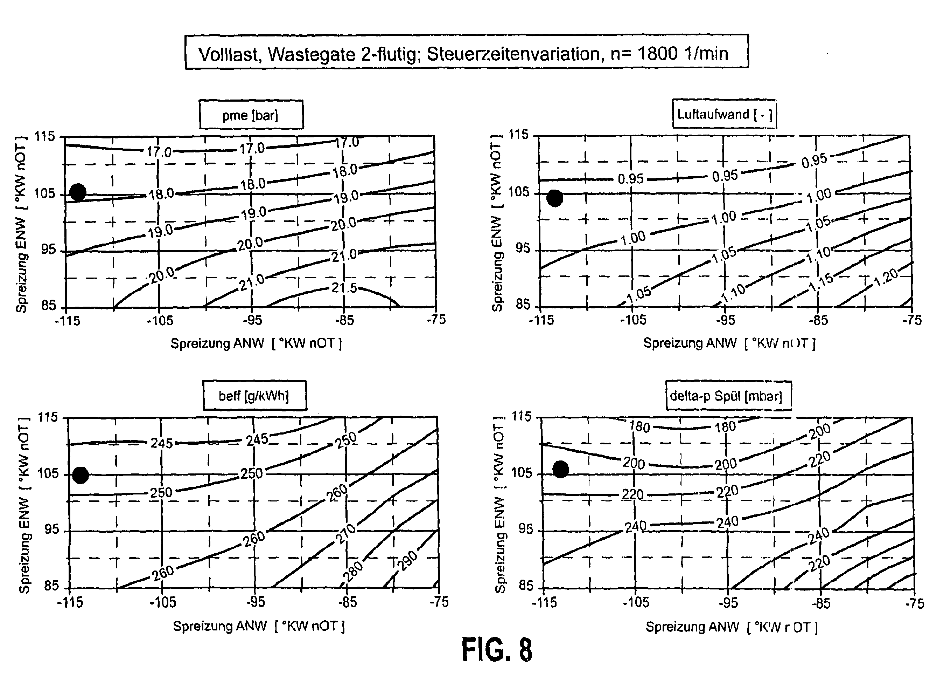

In Fig. 8 erkennt man, dass ausgehend von der Basisversion (jeweils dicker Punkt oben links in den Diagrammen) mit zunehmender Ventilüberschneidung der Motormitteldruck und der Luftaufwand bei unverändertem Spüldruckgefälle deutlich gesteigert werden können. Allerdings geht mit dieser Drehmomentensteigerung ebenfalls eine Verbrauchserhöhung einher.

Zum Zwecke der Ergänzung der Offenbarung wird hiermit explizit auf die zeichnerische Darstellung der Erfindung in den beiliegenden Figuren verwiesen.

### Bezugszeichenliste

- 1: Vorrichtung zum Betreiben einer Brennkraftmaschine
- 2: Brennkraftmaschine bzw. Otto-Motor
- 3: Direkteinspritzsystem
- 4: Abgaskanal
- 5: Turbine
- 6: Verdichter
- 7: Ansaugkanal
- 8: Verbindungslinie
- 9: Ladeluftkühler
- 10: Drosselklappenblock
- 11: Luftfilter
- 12: Abgas-Katalysator
- 13: Luftmassensensor
- 14: Einrichtung zur Einstellung der Ventilüberschneidung
- 15A-15D: Brennräume des Otto-Motors 2
- 16A: Zwillingstrom-Turbinengehäuse
- 16B: Doppelstrom-Turbinengehäuse
- 17A, 18A: Spiralfluten
- 17B, 18B: Spiralkanäle
- 19: Stoß-Stau-Umschaltventil
- 20: Turbinengehäuse-Eintrittsflansch
- 21: Turbinengehäusezunge
- 22: Trennwand
- 23: Ventilsitz
- 24: Bypass
- 25: Turbinengehäuse-Austritt
- 26: Schließteil bzw. Ventilstößel
- P: Positionierung des Stoß-Stau-Umschaltventils 19 zwi- schen Turbinengehäuseeintrittsflansch 20 und Turbi- nengehäusezunge 21

## Patentansprüche

1. Verfahren zum Betreiben einer Brennkraftmaschine in Form eines Otto-Motors (2) mit folgenden Verfahrensschritten:
- Vorverdichten der den Brennräumen (15A-15D) der Brennkraftmaschine (2) zugeführten Luft,
- direktes Einspritzen von Kraftstoff in die Brennräume (15A-15D) der Brennkraftmaschine (2),
- Einstellen der Ventilüberschneidung der Gaswechselventile entsprechend dem Lastbereich, in dem die Brennkraftmaschine (2) betrieben wird, und
- Ausführen des Vorverdichtens in einer Aufladevorrichtung in Form eines Abgas-Turboladers mit einer Turbine (5) mit verstellbarer Turbinengeometrie (VTG), wobei das Motorabgas der Turbine (5) über getrennte Spiralkanäle (17A, 18A; 17B, 18B) eines mehrflutigen Turbinengehäuses (16A; 16B) zugeführt wird, **gekennzeichnet durch** den Verfahrensschritt des Verbindens der **durch** die getrennten Spiralkanäle (17A, 18A; 17B, 18B) gebildeten getrennten Turbinenstränge bei mittleren und/oder hohen Motordrehzahlen **durch** Öffnen eines Umschaltventils (19).

2. Verfahren nach Anspruch 1, **dadurch gekennzeichnet, dass** als mehrflutiges Turbinengehäuse ein Doppelstrom-Turbinengehäuse (16B) verwendet wird.

3. Verfahren nach Anspruch 1, **dadurch gekennzeichnet, dass** als mehrflutiges Turbinengehäuse ein Zwillingstrom-Turbinengehäuse (16A) verwendet wird.

4. Verfahren nach Anspruch 1, **gekennzeichnet durch** den Verfahrensschritt des Betreibens des Umschaltventils (19) als Waste-Gate.

5. Vorrichtung zum Betreiben einer Brennkraftmaschine in Form eines Otto-Motors (2)
- mit einer Aufladevorrichtung in Form eines Abgas-Turboladers (5, 6),
- mit einer Kraftstoff-Direkteinspritzeinrichtung (3), und
- mit einer Einrichtung (14) zur Einstellung der Ventilüberschneidung von Gaswechselventilen der Brennkraftmaschine (2),
- wobei der Abgas-Turbolader (5, 6) mit einer variablen Turbinengeometrie (VTG) und einer Turbine (5) mit einem mehrflutigen Turbinengehäuse (16A; 16B) versehen ist, das zwei getrennt geführte Spiralkanäle (17A, 18A; 17B, 18B) aufweist, **gekennzeichnet durch** ein Umschaltventil (19) zur Verbindung der Spiralkanäle (17A, 18A; 17B, 18B) des mehrflutigen Turbinengehäuses (16A, 16B).

6. Vorrichtung nach Anspruch 5, **dadurch gekennzeichnet, dass** das Turbinengehäuse als Zwillingstrom-Turbinengehäuse (16A) ausgebildet ist.

7. Vorrichtung nach Anspruch 5, **dadurch gekennzeichnet, dass** das Turbinengehäuse als Doppelstrom-Turbinengehäuse (16B) ausgebildet ist.

8. Vorrichtung nach einem der Ansprüche 5 bis 7, **dadurch gekennzeichnet, dass** das Turbinengehäuse (16A; 16B) einen Bypasskanal (24) aufweist, der mittels des Umschaltventils (19) öffen- und schließbar ist.

9. Vorrichtung nach einem der Ansprüche 5 bis 7, **gekennzeichnet durch** einen stromab der Turbine (5) im Abgastrakt (4) angeordneten Abgas-Katalysator (12).

## Claims

1. Method for operating an internal combustion engine in the form of a spark-ignition engine (2), having the following method steps:
- pre-compressing the air which is supplied to the combustion chambers (15A-15D) of the internal combustion engine (2),
- direct injection of fuel into the combustion chambers (15A-15D) of the internal combustion engine (2),
- adjusting the valve overlap of the gas-exchange valves corresponding to the load range in which the internal combustion engine (2) is operated, and
- carrying out the pre-compression in a supercharging device in the form of an exhaust-gas turbocharger having a turbine (5) with variable turbine geometry (VTG), with the engine exhaust gas being supplied to the turbine (5) via separate spiral ducts (17A, 18A; 17B, 18B) of a multi-flow turbine housing (16A; 16B),
- **characterized by** the method step of connecting the separate turbine strands, which are formed by the separate spiral ducts (17A, 18A; 17B, 18B), at medium and/or high engine rotational speeds by opening a switching valve (19).

2. Method according to Claim 1, **characterized in that** a double-flow turbine housing (16B) is used as a multi-flow turbine housing.

3. Method according to Claim 1, **characterized in that** a twin-flow turbine housing (16A) is used as a multi-flow turbine housing.

4. Method according to Claim 1, **characterized by** the method step of operating the switching valve (19) as a wastegate.

5. Device for operating an internal combustion engine in the form of a spark-ignition engine (2),
- having a supercharging device in the form of an exhaust-gas turbocharger (5, 6),
- having a fuel direct injection device (3), and
- having a device (14) for adjusting the valve overlap of gas-exchange valves of the internal combustion engine (2),
- the exhaust-gas turbocharger (5, 6) being provided with a variable turbine geometry (VTG) and a turbine (5) is provided with a multi-flow turbine housing (16A; 16B) which has two separately-guided spiral ducts (17A, 18A; 17B, 18B),
- **characterized by** a switching valve (19) for connecting the spiral ducts (17A, 18A; 17B, 18B) of the multi-flow turbine housing (16A, 16B).

6. Device according to Claim 5, **characterized in that** the turbine housing is designed as a twin-flow turbine housing (16A).

7. Device according to Claim 5, **characterized in that** the turbine housing is designed as a double-flow turbine housing (16B).

8. Device according to one of Claims 5 to 7, **characterized in that** the turbine housing (16A; 16B) has a bypass duct (24) which can be opened and closed by means of the switching valve (19).

9. Device according to one of Claims 5 to 7, **characterized by** an exhaust-gas catalytic converter (12) which is arranged downstream of the turbine (5) in the exhaust tract (4).

## Revendications

1. Procédé d'exploitation d'un moteur à combustion interne sous la forme d'un moteur Otto (2), comportant les étapes suivantes :
- précomprimer l'air fourni aux chambres de combustion (15A-15D) du moteur à combustion interne (2);
- injecter directement du carburant dans les chambres de combustion (15A-15D) du moteur à combustion interne (2);
- réglage du chevauchement de soupapes des soupapes d'échange gazeux selon le domaine de charge, dans lequel le moteur à combustion interne (2) fonctionne; et
- exécution de la précompression dans un dispositif de suralimentation sous la forme d'un turbocompresseur à gaz d'échappement avec une turbine (5) à géométrie variable (VTG), dans lequel les gaz d'échappement du moteur sont envoyés à la turbine (5) par des canaux en spirale séparés (17A, 18A; 17B, 18B) d'un corps de turbine à flux multiples (16A; 16B),
**caractérisé par** l'étape de raccordement des courants de turbine séparés formés par les canaux en spirale séparés (17A, 18A; 17B, 18B), aux moyens et/ou hauts régimes du moteur, par l'ouverture d'une soupape d'inversion (19).

2. Procédé selon la revendication 1, **caractérisé en ce que** l'on utilise un corps de turbine à double courant (16B) comme corps de turbine à flux multiples.

3. Procédé selon la revendication 1, **caractérisé en ce que** l'on utilise un corps de turbine à courants jumelés (16A) comme corps de turbine à flux multiples.

4. Procédé selon la revendication 1, **caractérisé par** l'étape de commande de la soupape d'inversion (19) comme soupape de décharge.

5. Dispositif d'exploitation d'un moteur à combustion interne sous la forme d'un moteur Otto (2),
- avec un dispositif de suralimentation sous la forme d'un turbocompresseur à gaz d'échappement (5, 6),
- avec un système d'injection directe de carburant (3), et
- avec un dispositif (14) de réglage du chevauchement des soupapes de soupapes d'échange gazeux du moteur à combustion interne (2),
- dans lequel le turbocompresseur à gaz d'échappement (5, 6) est pourvu d'une turbine à géométrie variable (VTG) et d'un corps de turbine à flux multiples (16A; 16B), qui présente deux canaux en spirale séparés (17A, 18A; 17B, 18B),
**caractérisé par** une soupape d'inversion (19) pour raccorder les canaux en spirale (17A, 18A; 17B, 18B) du corps de turbine à flux multiples (16A; 16B).

6. Dispositif selon la revendication 5, **caractérisé en ce que** le corps de turbine se présente sous la forme d'un corps de turbine à flux jumelés (16A) .

7. Dispositif selon la revendication 5, **caractérisé en ce que** le corps de turbine se présente sous la forme d'un corps de turbine à double courant (16B).

8. Dispositif selon l'une quelconque des revendications 5 à 7, **caractérisé en ce que** le corps de turbine (16A; 16B) présente un canal de dérivation (24), qui peut être ouvert ou fermé au moyen de la soupape d'inversion (19).

9. Dispositif selon l'une quelconque des revendications 5 à 7, **caractérisé par** un catalyseur à gaz d'échappement (12) disposé dans la ligne des gaz d'échappement (4), en aval de la turbine (5).
